# EUROPEAN PATENT APPLICATION

(11) **EP 4 354 700 A1**
(43) Date of publication of application: **17.04.2024**
(21) Application number: 22382978.9
(22) Date of filing: 14.10.2022
(51) Int. Cl.: H02J 50/00, H02J 50/40

(54) **AMBIENT-POWERED ELECTRONIC DEVICE NETWORK**

(71) Applicant: Vodafone Group Services Limited, Newbury RG14 2FN (GB); Vodafone España, S.A.U., 28042 Madrid (ES)
(72) Inventor: ROMAGUERA, Cristina, London, W2 6BY (GB); EVANS, Tim, London, W2 6BY (GB)
(74) Representative: Boult Wade Tennant LLP

(57) **Abstract**

A method of operating an ambient-powered electronic device network is provided. The method comprises transmitting a radiative electromagnetic charging signal from a transmitter of the ambient-powered electronic device network, the radiative electromagnetic charging signal comprising a device selection component. The device selection component of the electromagnetic charging signal is configured to cause the radiative electromagnetic charging signal to selectively charge an ambient-powered electronic device.

## Description

### Field of the disclosure

The present disclosure relates to the Internet of Things (loT). In particular, the present disclosure relates to network-connected loT electronic devices.

### Background

The Internet of Things (loT) relates to devices (loT devices) with various sensing, processing, and communication technologies which are communicating with other devices and systems over a network.

For example, loT devices may include objects such as lights, heating systems, air conditioning systems, media systems, camera systems and the like. IoT devices differ from their conventional counterparts in that they include at least some capability to communicate with other devices over a network, for example the internet.

In order to provide network connected functionality, loT devices need access to some form of power source. For many loT devices, it may be possible to connect the loT device to a mains power. Where access to mains power is not readily available, loT devices may be provided with some form of battery to power the loT device. In some applications where the loT device is, for example, to be installed in an inaccessible location, the loT device may be designed to have a very low power consumption, such that the battery provided with the loT device can power the loT device for an extended period of time (e.g. several months or even years). It will be appreciated that incorporating a battery into an loT device, especially where the battery is intended to power the device for a number of years, adds cost, weight, and size to the loT device.

Instead of being provided with a conventional battery, some loT devices are provided with an alternative energy source. In particular, some battery-less loT devices are configured to harvest energy from their surroundings. Typically, this involves harvesting energy from an electromagnetic radiation source, for example an electromagnetic radiation source provided by the network over which the loT device communicates. Such loT devices are effectively powered by their ambient surroundings, and may be known as ambient-powered electronic devices.

The present disclosure relates to improvements in, or at least commercially important alternatives to, a method of operating an ambient-powered electronic device network.

### Summary

According to a first aspect of the disclosure, a method of operating an ambient-powered electronic device network is provided. The method comprises transmitting a radiative electromagnetic charging signal from a transmitter of the ambient-powered electronic device network, the radiative electromagnetic charging signal comprising a device selection component. The device selection component of the electromagnetic charging signal is configured to cause the radiative electromagnetic charging signal to selectively charge an ambient-powered electronic device.

As such, the method of the first aspect provides a method in which an ambient-powered electronic device in range of the ambient-powered electronic device network can be selectively charged. That is to say, there may be a plurality of ambient-powered electronic devices within range of the network, wherein the network is capable of selectively providing charging power to some of the ambient-powered electronic devices but not others at a given time. As such, the charging of the ambient-powered electronic device (and subsequent operation of the ambient-powered electronic device) is based on the device selection component of the radiative electromagnetic charging signal. That is to say, the ambient-powered electronic device only harvests energy from the radiative electromagnetic charging signal when the device selection component indicates that the ambient-powered electronic device should be charged. In effect, the device selection component of the radiative electromagnetic charging signal controls which ambient-powered electronic devices are selectively charged, and which devices are not charged at any given time.

It will be appreciated that ambient-powered electronic devices are battery-less electronic devices. As such the ambient-powered electronic devices are charged by harvesting energy from the radiative electromagnetic charging signal transmitted by the transmitter (or transmitters) of the network. Ambient-powered electronic devices must generally accumulate charge from the radiative electromagnetic charging signal for a period of time before they have accumulated sufficient charge to perform a function. As such, ambient-powered electronic devices may not be able to harvest sufficient energy from their ambient surroundings to be in constant contact with a network.

For example, simultaneously charging every ambient-powered electronic device connected to a network may result in a plurality of ambient-powered electronic devices attempting to communicate over the network at the same time, resulting in congestion on the network. As ambient-powered electronic devices may only harvest sufficient energy to transmit a single communication at a time, network congestion may be particularly undesirable as the ambient-powered electronic devices may not have sufficient power to re-transmit communications if the network is congested.

In other applications, it may be desirable for ambient-powered electronic devices to be charged only at selected times or locations. For example, in some hazardous locations, it may be desirable for an ambient-powered electronic device to only be operational/charging for a limited period of time, and unpowered/not charging for an extended period of time. When unpowered/not charging, the ambient-powered electronic device effectively has no electronic footprint, thereby rendering the device safe to use in some hazardous locations where continuous operation of an electronic device may pose a safety risk.

In another application, it may be desirable for an ambient-powered electronic device to be selectively chargeable as a security feature. As such, the ambient-powered electronic device can only be charged (and therefore operated) when presented with a radiative electromagnetic charging signal comprising a device selection component associated with the ambient-powered electronic device. As such, the device selection component of the radiative electromagnetic charging signal may be used effectively as a security key for controlling operation of the ambient-powered electronic device. It will be appreciated that such an ambient-powered electronic device will be unpowered when not presented with an appropriate radiative electromagnetic charging signal, such that the ambient-powered electronic device will have no electronic footprint when not operational.

Thus, there are various applications for an ambient-powered electronic device network in which the operation of the ambient-powered electronic devices can be controlled via the selective charging of the ambient-powered electronic devices within range of the network.

In some embodiments, the method further comprises using a device selection controller of the ambient-powered electronic device network to determine at least one ambient-powered electronic device to be operated on the ambient-powered electronic device network. The device selection controller then instructs the transmitter to transmit the device selection component of the radiative electromagnetic charging signal based on the determined at least one ambient-powered electronic device. As such, the device selection controller can control the ambient-powered electronic device to selectively charge and operate ambient-powered electronic devices. The device selection controller may be configured to selectively charge individual ambient-powered electronic devices, or groups of ambient-powered electronic devices at a given time. For example, in some embodiments the device selection controller instructs the transmitter to transmit a first radiative electromagnetic charging signal comprising a first device selection component configured to cause a first group of ambient electronic devices to be selectively charged, and subsequently the device selection controller instructs the transmitter to transmit a second radiative electromagnetic charging signal comprising a second device selection component configured to cause a second group of ambient electronic devices to be selectively charged, the second group of ambient electronic devices different to the first group of ambient electronic devices.

In some embodiments, the ambient-powered electronic device network comprises a plurality of transmitters, and the radiative electromagnetic charging signal comprising the device selection component is transmitted from each of the plurality of transmitters of the ambient electronic device network. As such, the plurality of transmitters of the ambient-powered electronic device network may be a radio access network (RAN) or similar telecommunications network. By transmitting the radiative electromagnetic charging signal from each transmitter of the network, any ambient-powered electronic device within range of the network may be capable of being selectively charged. That is to say, any ambient-powered electronic device selected by the device selection component within range of the of the network may be selectively charged. Alternatively, in some embodiments, the radiative electromagnetic charging signal comprising the device selection component is transmitted from a sub-group of transmitters of the plurality of transmitters. As such, in some embodiments, the device selection component may be implemented by selectively charging only ambient-powered electronic devices within range of a sub-group of transmitters from the plurality of transmitters. For example, in some embodiments, the device selection component may cause transmitters within a certain geographic location to transmit a radiative electromagnetic charging signal, while other transmitters of the network do not transmit the signal. Thus, only devices within range of the certain geographic location may be selectively charged. Such a device selection component may be particularly applicable in applications where it is desirable to record or track the location of ambient-powered electronic devices within an ambient-powered electronic device network.

In some embodiments, the transmitter (or plurality of transmitters) may transmit one or more communication signals in addition to the radiative electromagnetic charging signal. The communication signal(s) may be transmitted in order to communicate with ambient-powered electronic devices which are currently operational and within range of the transmitter(s). The communication signal(s) may be different to the radiative electromagnetic charging signal. For example, the communication signal(s) may be transmitted at a different frequency to the radiative electromagnetic charging signal. As such, in some embodiments, the radiative electromagnetic charging signal may be transmitted by the ambient-powered device network exclusively for selectively charging ambient-powered electronic devices, whilst also transmitting separate communication signals in order to communicate with charged ambient-powered electronic devices. In some further embodiments, it will also be appreciated that the ambient-powered electronic device network may be provided for the selective charging of the ambient-powered electronic devices, wherein once charged, the ambient-powered electronic devices communicate via a different network (i.e. communicate with a different transmitter/receiver to the transmitter transmitting the radiative electromagnetic charging signal).

In some embodiments, the transmitter (or plurality of transmitters) may use the radiative electromagnetic charging signal to selectively charge, and to communicate with (charged) ambient-powered electronic devices. As such, the radiative electromagnetic charging signal may include one or more communication messages intended to be received by a (charged) ambient-powered electronic device.

In some embodiments, the device selection component of the radiative electromagnetic charging signal comprises a frequency component selected from a group of frequency components, and wherein the frequency component of the radiative electromagnetic charging signal is configured to select an ambient-powered electronic device associated with the frequency component for charging. It will be appreciated that ambient-powered electronic devices can be configured to receive electromagnetic signals of certain frequencies (or combinations of frequencies), but not other frequencies (e.g. a bandpass filter). In particular, frequency filtering of a radiative electromagnetic charging signal can be implemented in the hardware of ambient-powered electronic devices. As such, each ambient-powered electronic device can be selected for charging based on the frequency component of the radiative electromagnetic charging signal.

In some embodiments, the method further comprises a receiver of the ambient-powered electronic device network receiving a communication from the ambient-powered electronic device associated with the device selection component after transmission of the radiative electromagnetic charging signal to the ambient-powered electronic device. That is to say, the method may cause an ambient-powered electronic device to be selectively charged, following which the ambient-powered electronic device has sufficient power to perform some form of operation which results in the ambient-powered electronic device transmitting a communication from the ambient-powered electronic device to the receiver. As noted above, selective operation of the ambient-powered electronic devices on the ambient-powered electronic device network means that the number of communications being transmitted over the ambient-powered electronic device network at any given time may be controlled via the number of ambient-powered electronic devices which are selectively charged at any given time. In particular, where ambient-powered electronic devices are intended to transmit communications intermittently, for example once every six hours, once every twelve hours, or once a day, the ambient-powered electronic device network may distribute the selective charging of different ambient-powered electronic devices throughout the day. As such, communications from different ambient-powered electronic devices may be received at a steady rate throughout the day, rather than receiving a cluster of messages at the same time (in the event that all ambient-powered electronic devices are charged at the same time).

According to a second aspect of the disclosure, a transmitter for an ambient-powered device network is provided. The transmitter is configured to perform the method of the first aspect. As such, it will be appreciated that the transmitter may be configured to perform any of the optional features of the first aspect discussed above.

According to a third aspect of the disclosure, a method of operating an ambient-powered electronic device of an ambient-powered electronic device network is provided. The method comprises receiving a radiative electromagnetic charging signal from a transmitter of the ambient-powered electronic device network, the radiative electromagnetic charging signal comprising a device selection component; and wherein the device selection component of the electromagnetic charging signal is configured to cause the radiative electromagnetic charging signal to selectively charge the ambient-powered electronic device.

As such, it will be appreciated that the ambient-powered electronic device may be selectively charged by a radiative electromagnetic charging signal. The radiative electromagnetic signal comprises a device selection component which causes the ambient-powered electronic device to be selectively charged. That is to say, the ambient-powered electronic device is not required to be powered (e.g. by a battery or mains power) in order to determine whether or not to charge. Rather, the device selection component causes the ambient-powered electronic device to be selectively charged or not. In effect, the ambient-powered electronic device can passively determine whether or not to be selectively charged based on the device selection component.

In some embodiments, the ambient-powered electronic device receives a first radiative electromagnetic charging signal comprising a first device selection component associated with the ambient-powered electronic device wherein the ambient-powered electronic device is selectively charged by the first radiative electromagnetic charging signal, and the ambient-powered electronic device receives a second radiative electromagnetic charging signal comprising a second device selection component which is associated with another ambient-powered electronic device, wherein the ambient-powered electronic device is not selectively charged by the second radiative electromagnetic charging signal. As such, the ambient-powered electronic device may receive different radiative electromagnetic charging signals, wherein only some radiative electromagnetic charging signal are capable of causing the ambient-powered electronic device to charge depending on the device selection component of the radiative electromagnetic charging signal.

In some embodiments, the device selection component of the radiative electromagnetic charging signal comprises an amplitude of the radiative electromagnetic charging signal, and when the amplitude of the radiative electromagnetic charging signal received by the ambient-powered electronic device is above a predetermined threshold, the ambient-powered electronic device is selectively charged. In some embodiments, the amplitude of the radiative electromagnetic charging signal received may be used as a device selection component. It will be understood that the amplitude of the signal received is inversely proportional to the distance of the ambient-powered electronic device from the transmitter. Thus, the amplitude of the received signal may be used to selectively charge ambient-powered electronic devices within a certain distance of a transmitter (or transmitters) which are transmitting the radiative electromagnetic signal. In such embodiments, selective operation of transmitters across an ambient-powered electronic device network may allow ambient-powered electronic devices to be located based on their proximity to one or more transmitters.

In some embodiments, the device selection component of the radiative electromagnetic charging signal comprises a frequency component selected from a group of frequency components, and wherein the ambient-powered electronic device is selectively charged when the frequency component of the radiative electromagnetic charging signal corresponds to a frequency component associated with the ambient-powered electronic device. As such, the ambient-powered electronic device may be selectively charged based on a frequency, or a combination of frequencies, received as part of the radiative electromagnetic charging signal.

In some embodiments, the ambient-powered electronic device comprises a device selection circuit which filters the radiative electromagnetic charging signal based on the frequency component associated with the ambient-powered electronic device to determine if the ambient-powered electronic device is selectively charged. As such, the device selection circuit may be configured to pass a frequency, or combination of frequencies, which in turn allow the ambient-powered electronic device to be charged. It will be appreciated that the device selection circuit may be implemented in the hardware of the ambient-powered electronic device such that the filter circuit operates passively.

In some embodiments, once the ambient-powered electronic device is selectively charged, the ambient-powered electronic device performs a computational routine, wherein optionally the computational routine comprises determining information from a sensor of the ambient-powered electronic device. For example, the sensor may be a temperature sensor, a humidity sensor, a Global Positioning Sensor (GPS), a light sensor, a pressure sensor, a vibration sensor, an accelerometer, or a charge coupled device image sensor. The computational routine may comprise taking a measurement from the sensor and determining one or more monitoring parameters from the measurement. The monitoring parameter may then be stored in a memory of the ambient-powered electronic device and/or communicated over the ambient-powered electronic device network.

In some embodiments, once the ambient-powered electronic device is selectively charged, the ambient-powered electronic device transmits a communication over the ambient-powered electronic device network to a receiver of the ambient-powered electronic device network. In some embodiments, the ambient-powered electronic device may transmit a communication comprising one or more monitoring parameters which have been determined by the ambient-powered electronic device. As such, the ambient-powered electronic device may be used to remotely monitor a parameter for an extended period of time without requiring any user maintenance or connection to mains power.

According to a fourth aspect, an ambient-powered electronic device configured to perform the method of the third aspect is provided. As such, it will be appreciated that the ambient-powered electronic device may be configured to perform any of the optional features of the third aspect discussed above.

According to a fifth aspect of the disclosure, an ambient-powered electronic device is provided. The ambient-powered electronic device comprises the transmitter of the second aspect and the ambient-powered electronic device of the fourth aspect.

In some embodiments, it will be appreciated that the ambient-powered electronic device network comprises a plurality of transmitters according to the second aspect, wherein the plurality of transmitters are controlled by a device selection controller described above. It will also be appreciated that a plurality of ambient-powered electronic devices according to the fourth aspect may be provided within range of the ambient-powered electronic device network such that they may be selectively charged (and thus operated) by the ambient-powered electronic device network.

### Brief description of the figures

The disclosure will now be described with reference to the following non-limiting figures. Further advantages of the disclosure are apparent by reference to the detailed description when considered in conjunction with the figures in which:
- Fig. 1 shows a block diagram of an ambient-powered electronic device network; and

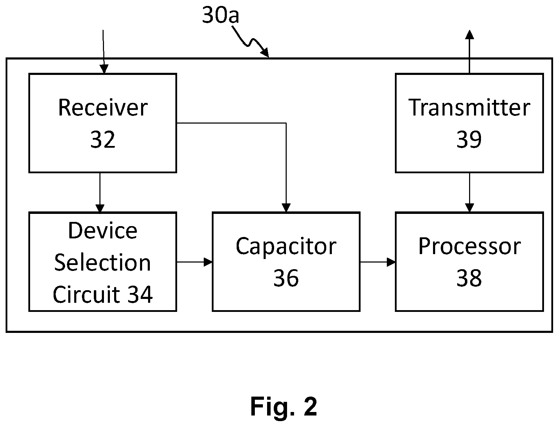

- Fig. 2 shows a block diagram of an ambient-powered electronic device.

### Detailed description

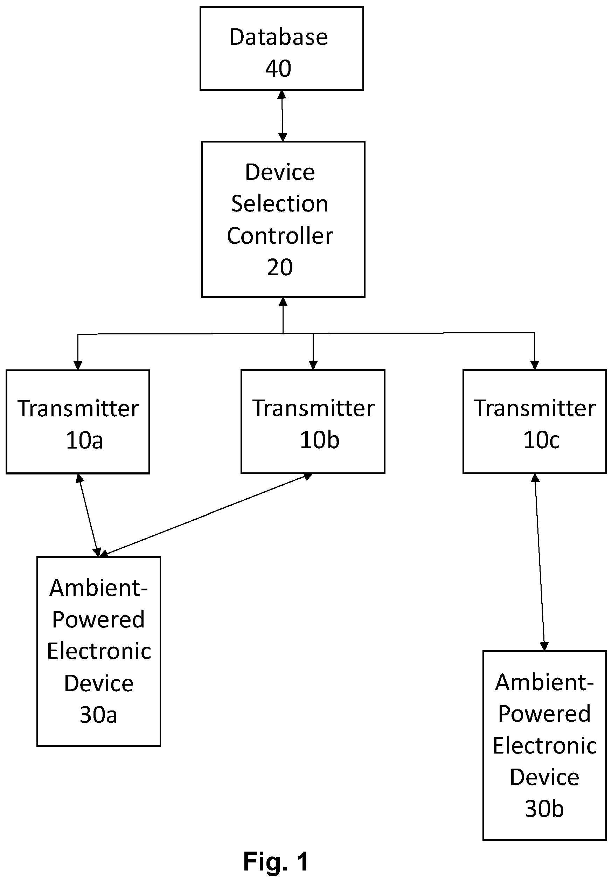

According to this disclosure, an ambient-powered electronic device network 1 is provided. Fig. 1 shows a block diagram of the ambient-powered electronic device network 1. As shown in Fig. 1, the ambient-powered electronic device network 1 comprises a plurality of transmitters 10a, 10b, 10c, a device selection controller 20, and a plurality of ambient-powered electronic devices 30a, 30b.

Each of the transmitters 10a, 10b, 10c, is configured to transmit a radiative electromagnetic charging signal. For example, each transmitter 10a, 10b, 10c, may be provided as part of a Radio Access Network, for example a cellular network (i.e. the ambient-powered electronic device network 1). In some embodiments, one or more of the transmitters 10a, 10b, 10c may be a transceiver which is also configured to receive communications from an ambient-powered electronic device 10a, 10b, 10c. For example, in some embodiments a transmitter 10a, 10b, 10c of a cellular network may transmit a radiative electromagnetic charging signal in the RF frequency band from about 600 MHz to 6 GHz. In some embodiments, the transmitters 10a, 10b, 10c may transmit to, and receive communications from, the ambient-powered electronic device 30a, 30b using a 3GPP (3rd Generation Partnership Project) network protocol.

While in some embodiments, the transmitters 10a, 10b, 10c may form part of a cellular network, other wireless networks may also be used. For example, the transmitters may each be configured to transmit a WiFi signal, or other form of electromagnetic radiation. For example, the RF frequency band from 3 KHz to 300 GHz, or more preferably a subset of this band, the Microwave Frequency Band from 1 GHz to 110 GHz (as designated in IEEE 521-1984) may provide a range of frequencies over which a radiative electromagnetic charging signal may be transmitted which provides ambient energy suitable for energy harvesting. In particular IEEE standards 802.11a, 802.11b, and 802.11g and WiFi routers/transceivers used in homes, businesses, warehouses, stores and in towns or cities transmit a known wavelength (or frequency) in the S-band (2 GHz to 4 GHz) and the C-band (4 GHz to 8 GHz).

Each of the ambient-powered electronic devices 30a, 30b is configured to be selectively charged by the radiative electromagnetic charging signal. That is to say, each of the ambient-powered electronic devices 30a, 30b is capable of harvesting energy from the radiative electromagnetic charging signal in order to charge the ambient-powered electronic device 30a, 30b.

For example each ambient-powered electronic device 30a, 30b may be provided with an antenna (not shown) configured to receive the radiative electromagnetic charging signal, and circuitry configured to convert the energy in the received electromagnetic charging signal in to useable electric power (i.e. power having the appropriate voltage and current levels and of the appropriate waveform, such as direct current power) for the ambient-powered electronic device 30a, 30b. Each ambient-powered electronic device 30a, 30b may also have a device selection circuit which is configured to select whether the ambient-powered electronic device 30a, 30b is to be selectively charged based on the device selection component of the radiative electromagnetic charging signal. For example, an ambient-powered electronic device 30a, 30b may be provided in accordance with the wireless electronic devices described in US 2007/0109121 A1.

The device selection controller 20 may be configured to determine at least one ambient-powered electronic device 30a, 30b which is to be operated on the ambient-powered electronic device network 1. For example, the device selection controller 20 may have access to a database 40 comprising information identifying a plurality of ambient-powered electronic devices 30a, 30b. For each ambient-powered electronic device 30a, 30b in the database, the database may include device selection information associated with each of the ambient-powered electronic devices 30a, 30b.

In some embodiments, the database 40 may include information identifying each ambient-powered electronic device 30a, 30b within range of the ambient-powered electronic device network 1. In some embodiments, the database 40 may also include information identifying ambient-powered electronic devices which are currently not within range of the ambient-powered electronic device network 1.

Once the device selection controller 20 has determined the ambient-powered electronic device(s) 30a, 30b to be selectively charged, the device selection controller 20 is configured to instruct one or more of the transmitters 10a, 10b, 10c to transmit the radiative electromagnetic charging signal and a device selection component based on the determined at least one ambient-powered electronic device to be selectively charged.

The ambient-powered electronic device network 1 may generally be operated by using one or more of the transmitters 10a, 10b, 10c to transmit the radiative electromagnetic charging signal comprising a device selection component. For example, in the embodiment of Fig. 1, the transmitter 10a may transmit the radiative electromagnetic charging signal. An ambient-powered electronic device 30a within range of the transmitter 10a may receive the radiative electromagnetic charging signal, wherein based on the device selection component of the signal, the ambient-powered electronic device 10a is selectively charged.

Next, methods of operating the ambient-powered electronic device network 1 and first and second ambient-powered electronic device 30a, 30b will be described.

In some embodiments, the device selection component transmitted by the one or more transmitters 10a, 10b, 10c may comprise a frequency component. Thus, when the device selection controller 20 determines a first ambient-powered electronic device 30a to be selectively charged, the device selection controller 20 may access the database 40 to identify a frequency component associated with the determined first ambient-powered electronic device 30a. As such, the frequency component is associated with the first ambient-powered electronic device 30a but not associated with the second ambient-powered electronic device 30b.

The transmitters 10a, 10b, 10c may then transmit the radiative electromagnetic charging signal, including the frequency component, to the ambient-powered electronic devices 30a, 30b within range of the transmitters 10a, 10b, 10c. The first and second ambient-powered electronic devices 30a, 30b receive the radiative electromagnetic charging signal. The frequency component causes the first ambient-powered electronic device 30a to be selectively charged by the radiative electromagnetic charging signal. The frequency component is not associated with the second ambient-powered electronic device 30b such that the second ambient-powered electronic device 30b is not selectively charged by the radiative electromagnetic charging signal.

In some embodiments, each ambient-powered electronic device 30a, 30b comprises a device selection circuit which determines whether the device selection component of the radiative electromagnetic charging signal is associated with the ambient-powered electronic device 30a, 30b. For example, the first ambient-powered electronic device 30a comprises a first device selection circuit which may be configured to determine whether the radiative electromagnetic charging signal includes a frequency component associated with the first ambient-powered electronic device 30a. For example, the first device selection circuit may filter the radiative electromagnetic charging signal using one or more bandpass filters. Thus, if the radiative electromagnetic charging signal comprises a frequency component which corresponds to the pass band(s) of the one or more bandpass filters of the first device selection circuit, the first ambient-powered electronic device 30a is selectively charged.

The second ambient-powered electronic device 30b includes a second device selection circuit. Similar to the first device selection circuit, the second device selection circuit may filter the radiative electromagnetic charging signal using one or more bandpass filters, wherein the pass band(s) of the bandpass filter(s) are different to those of the first device selection circuit. Thus, the radiative electromagnetic charging signal may not comprise a frequency component which corresponds to the pass band(s) of the one or more bandpass filters of the second device selection circuit. Accordingly, the frequency component of the radiative electromagnetic charging signal may cause the first ambient-powered electronic device 30a to be selectively charged and the second ambient-powered electronic device 30b to not be charged. It will be appreciated that the first and second device selection circuits may, in some embodiments, be implemented as passive filter circuits. As such, it will be appreciated that the first and second ambient-powered electronic devices 30a, 30b are not required to be powered in order to determine whether or not they are to be selectively charged. That is to say, the selective charging of the ambient-powered electronic devices may be determined using a passive device selection circuit, rather than using an actively powered electronic circuit (e.g. a circuit comprising a processor and the like).

In some embodiments, the device selection circuit of each ambient-powered electronic device 30a, 30b may allow the ambient-powered electronic device 30a, 30b to be selectively charged by only certain frequencies, and not other frequencies. In other embodiments, the device selection circuit may be configured to detect the presence of a particular frequency component (e.g. a particular frequency or combination of frequencies), at which point the device selection circuit allows the ambient-powered electronic device 30a, 30b to be selectively charged by electromagnetic radiation having a wider range of frequencies. That is to say, the device selection circuit may be configured to allow the ambient-powered electronic device 30a, 30b to harvest energy only from specific frequencies associated with ambient-powered electronic device 30a, 30b. Alternatively, the device selection circuit may be configured to detect the presence of an associated frequency component, at which point the device selection circuit allows the ambient-powered electronic device 30a, 30b to harvest energy having e.g. any frequency.

As an example, the device selection controller 20 may instruct the transmitters 10a, 10b, 10c to transmit a first radiative electromagnetic charging signal having a first frequency component (device selection component) with a frequency range of 1 GHz to 5 GHz. After transmitting the first radiative electromagnetic charging signal for a period of time, the device selection controller 20 may instruct the transmitters 10a, 10b, 10c, to transmit a second radiative electromagnetic charging signal having a second frequency component (device selection component), different to the first frequency component. The second frequency component may have a frequency range of 10 GHz to 15 GHz.

In some embodiments, the device selection component transmitted by the one or more transmitters 10a, 10b, 10c may comprise an amplitude of the radiative electromagnetic charging signal. That is to say, when the amplitude of the radiative electromagnetic charging signal received by the ambient-powered electronic device is above a predetermined threshold, the ambient-powered electronic device is selectively charged. An amplitude-based device selection component may be particularly applicable for the selective charging of ambient-powered electronic devices in certain regions of an ambient-powered device network, while ambient-powered electronic devices located in other regions of the ambient-powered electronic device are not charged. Such methods may allow for ambient-powered electronic devices to be located within an ambient-powered electronic device network in a straightforward and power efficient manner, relative to other computational location tracking technologies (e.g. Global Positioning System GPS).

In some embodiments, each ambient-powered electronic device 30a, 30b may have a device selection circuit which is configured to detect an amplitude of the radiative electromagnetic charging signal. If the amplitude of the radiative electromagnetic charging signal is greater than or equal to a predetermined threshold, the device selection circuit allows the radiative electromagnetic device to be selectively charged. If the amplitude of the radiative electromagnetic charging signal is below the predetermined threshold, the device selection circuit does not allow the ambient-powered electronic device 30a, 30b to be selectively charged.

For example, in the embodiment of Fig. 1, a first transmitter 10a may transmit a first radiative electromagnetic charging signal, while the second and third transmitters 30b, 30c of the ambient-powered electronic device network 1 do not transmit the first radiative electromagnetic charging signal.

As shown in Fig. 1, the first ambient-powered electronic device 30a is located closer to the first transmitter 10a than the second ambient-powered electronic device 30b. Each of the first and second ambient-powered electronic devices 30a, 30b includes a device selection circuit which is configured to selectively charge the respective ambient-powered electronic device based on the amplitude of the radiative electromagnetic charging signal received. In this embodiment, each of the device selection circuits of the first and second ambient-powered electronic devices 30a, 30b has the same predetermined threshold. Of course, in other embodiments, different ambient-powered electronic devices within range of the ambient-powered electronic device network may have different predetermined thresholds.

The amplitude of the first radiative electromagnetic charging signal received by the first ambient-powered electronic device 30a is greater than the predetermined threshold of the device selection circuit of the first ambient-powered electronic device 30a. Thus, the first ambient-powered electronic device 30a is selectively charged by the first radiative electromagnetic charging signal.

Once charged, the first ambient-powered electronic device 30a may be configured to perform a computational routine. For example, the first ambient-powered electronic device 30a may be configured to transmit a message over the ambient-powered electronic device network 1 to a receiver of the ambient-powered electronic device network 1. The message transmitted by the first ambient-powered electronic device 30a may include a unique identifier for the first ambient-powered electronic device 30a.

The amplitude of the first radiative electromagnetic charging signal received by the second ambient-powered electronic device 30b may be lower than the amplitude received by the first ambient-powered electronic device 30a, as the second ambient-powered electronic device 30b is located further away from the first transmitter 10a than the first ambient-powered electronic device 30a. As such, the amplitude of the first radiative electromagnetic charging signal received by the second ambient-powered electronic device 30b may be below the predetermined threshold of the device selection circuit of the second ambient-powered electronic device 30b. Accordingly, the second ambient-powered electronic device 30b is not selectively charged by the first radiative electromagnetic charging signal. Consequently, the second ambient-powered electronic device 30b does not transmit a message over the ambient-powered electronic device network 1 in response to the first electromagnetic charging signal.

Thus, in some embodiments the ambient-powered electronic device network 1 may determine which ambient-powered electronic devices (e.g. first ambient-powered electronic device 30a) are located proximate to the first transmitter 10a based on the messages received in response to the first electromagnetic charging signal. That is to say, the ambient-powered electronic device network 1 may infer that an ambient-powered electronic device 30a is located within a certain range of the first transmitter 10a based on predetermined threshold and the power used to transmit the first radiative electromagnetic charging signal.

Next, the second transmitter 10b may transmit a second radiative electromagnetic charging signal, while the first and third transmitters 10a, 10b, do not transmit a radiative electromagnetic charging signal. The second radiative electromagnetic charging signal may be received by the first and second ambient-powered electronic devices 30a, 30b. In some embodiments, the first and second ambient-powered electronic devices 30a, 30b are located far enough away from the second transmitter 10b such that the amplitude of the second radiative electromagnetic charging signal received by each of the first and second ambient-powered electronic devices 30a, 30b is below the predetermined threshold. Thus, no ambient-powered electronic devices 30a, 30b are selectively charged in response to the second radiative electromagnetic charging signal. Thus, the ambient-powered electronic device network 1 may determine that no ambient-powered electronic devices 30a, 30b are located proximal to the second transmitter 10b.

Next, the third transmitter 10c may transmit a third radiative electromagnetic charging signal, while the first and second transmitters 10a, 10b do not transmit a radiative electromagnetic charging signal. Where the amplitude of the third radiative electromagnetic charging signal received by the second ambient-powered electronic device 30b is greater than the predetermined threshold, the second ambient-powered electronic device 30b may be selectively charged by the third radiative electromagnetic charging signal. Once charged, the second ambient-powered electronic device 30b may transmit a message over the ambient-powered electronic device network 1, thereby allowing the ambient-powered electronic device network to determine that the second ambient-powered electronic device 30b is located proximal to the third transmitter 10c.

In the above embodiment, the first and second ambient-powered electronic devices 30a, 30b are selectively charged based on a device selection component which is an amplitude of the radiative electromagnetic charging signal only. In some embodiments, it will be appreciated that the device selection component may comprise more than one device selection component. That is to say, the device selection component may, for example, comprise an amplitude of the radiative electromagnetic charging signal and a frequency component.

As discussed above, ambient-powered electronic devices 30a, 30b according to this disclosure are configured to be selectively charged by a radiative electromagnetic charging signal. The radiative electromagnetic charging signal received by an ambient-powered electronic device may be used to selectively charge a capacitor 36 of the ambient-powered electronic device 30a, 30b. That is to say, the energy harvested from the radiative electromagnetic charging signal may be stored in a capacitor 36 of the ambient-powered electronic device.

It will be appreciated that the ambient-powered electronic devices 30a, 30b store energy in a capacitor 36, rather than a battery. The ambient-powered electronic devices 30a, 30b of this disclosure are configured to harvest energy from the radiative electromagnetic charging signal until sufficient energy is stored in the capacitor 36 to allow the ambient-powered electronic device 30a, 30b to perform a computational routine. Upon performing the computational routine, the capacitor 36 is discharged and the ambient-powered electronic device 30a, 30b must be selectively charged again in order to operate the device. As such, unless the capacitor 36 of the ambient-powered electronic device 30a, 30b is being selectively charged, or is being used to power the ambient-powered electronic device 30a, 30b, the capacitor 36 is generally in an uncharged state.

As noted above, the capacitor 36 provides the power for the ambient-powered electronic device 30a, 30b to perform a computational routine. In order to limit the size of the capacitor 36 required, and the time taken to charge the capacitor 30 from the radiative electromagnetic charging signal, it is preferable that the energy required to perform the computational routine is limited.

For example, in one embodiment, the computational routine to be performed may comprise transmitting a message to a receiver of a radio access network (for example the ambient-powered electronic device network 1). As an example, operating the processor 38, receiver 32 and transmitter 39 to connect to a network and send a communication including a data packet over the network may require a power draw of about 370 mW (i.e. an ambient-powered device operating at 3.7 V having a current draw of about 100 mA). The entire computational routine may take around 2 seconds to 10 seconds to complete, depending on the network and the communication to be sent. As such, the total energy required to perform the computational routine would be about 0.02 mWh to 1 mWh.

The computational routine may comprise determining a location of the ambient-powered electronic device, for example using a Global Positioning System (GPS) module (not shown). The entire computational routine may take around 5 minutes to complete and require a power draw of about 185 mW (i.e. an ambient-powered device operating at 3.7 V having a current draw of about 50 mA). As such, the total energy required to perform the computational routine would be about 15.41 mWh.

In some embodiments, the computational routine may comprise taking a measurement from a sensor and transmitting the measurement over a network. The entire computational routine may take around 5 seconds to complete and require a power draw of about 10 mW (i.e. an ambient-powered device operating at 3.3 V having a current draw of about 3 mA). As such, the total energy required to perform the computational routine would be about 0.014 mWh.

It will be appreciated that the above described embodiments are examples of computational routines that may be performed by an ambient-powered electronic device 30a, 30b. The indicated power requirements are also examples of possible power requirements for the indicated computational routines. It will be appreciated that various modifications to the computational routines, the ambient-powered electronic device performing the routine, and any associated power requirements are envisaged by this disclosure.

The capacitor 36 may be selected in order to provide sufficient energy storage to allow the ambient-powered electronic device 30a, 30b to perform the computational routine once suitably charged. For example, in order to provide the ambient-powered electronic device with a power of about 185 mW for about 10 seconds would require a capacitor having a capacitance of around 1.6 F. For example, in some embodiments, the capacitor 36 may be a supercapacitor (ultracapacitor). Examples of such supercapacitors include an electrostatic double-layer capacitor (EDLC), an electrochemical pseodocapacitor, or a hybrid capacitor. Supercapacitors may be particularly applicable to embodiments where an ambient-powered device requires a capacitor 36 having a capacitance of at least: 0.5 F, 1 F, 2 F, 5 F or 10 F. For example, a supercapacitor (e.g. an EDLC) may have a capacitance of no greater than: 10 F, 20 F, 50 F, 100 F, 200 F or 400 F.

As discussed above, the ambient-powered electronic device 30a, 30b may be selectively charged by the radiative electromagnetic charging signal. As an example, the ambient-powered electronic device 30a may be configured to harvest energy from a radiative electromagnetic charging signal having an associated device selection component at a rate of about 0.1 µW, or about 1 µW. It will be appreciated that the rate of charging will depend on the power density of the radiative electromagnetic charging signal, the size of the receiver 32 of the ambient-powered electronic device, and the efficiency of the receiver 32 and device selection circuit.

Where the ambient-powered electronic device 30a, 30b is selectively charged at a rate of about 0.1 µW the ambient-powered electronic device 30a may harvest energy at a rate of 0.36 mW/h. Thus, where a computational routine requires about 0.014 mWh of energy (e.g. taking a measurement from a sensor and transmitting the measurement over a network as described above), an ambient powered device 30a, 30b charging at a rate of about 0.1 µW may harvest sufficient energy over a few minutes.

Where the ambient-powered electronic device 30a, 30b is selectively charged at a rate of about 1 µW the ambient-powered electronic device 30a may harvest energy at a rate of 3.6 mW/h. Thus, it will be appreciated that such an ambient-powered electronic device 30a, 30b may be selectively charged for about five hours in order to have sufficient energy stored to perform a computational routine comprising determining a location of the ambient-powered electronic device, for example using a Global Positioning System (GPS) module.

In some embodiments, the ambient-powered electronic device 30a, 30b may determine it has sufficient energy to perform a computational routine based on the voltage across the capacitor 36. As such, upon the capacitor reaching a predetermined voltage threshold, the ambient-powered electronic device may be configured to power the processor 38 and perform the computational routine.

Thus, it will be appreciated that embodiments of this disclosure provide an ambient-powered electronic device 30a, 30b, a transmitter of an ambient-powered electronic device network 1, and an ambient-powered electronic device network 1, along with methods of operating the above.

## Claims

1. A method of operating an ambient-powered electronic device network comprising:
transmitting a radiative electromagnetic charging signal from a transmitter of the ambient-powered electronic device network, the radiative electromagnetic charging signal comprising a device selection component; and
wherein the device selection component of the electromagnetic charging signal is configured to cause the radiative electromagnetic charging signal to selectively charge an ambient-powered electronic device.

2. A method according to claim 1, wherein
a device selection controller of the ambient-powered electronic device network determines at least one ambient-powered electronic device to be operated on the ambient-powered electronic device network, and
the device selection controller instructs the transmitter to transmit the device selection component of the radiative electromagnetic charging signal based on the determined at least one ambient-powered electronic device.

3. A method according to claim 1 or claim 2, wherein
the device selection controller instructs the transmitter to transmit a first radiative electromagnetic charging signal comprising a first device selection component configured to cause a first group of ambient electronic devices to be selectively charged, and
subsequently the device selection controller instructs the transmitter to transmit a second radiative electromagnetic charging signal comprising a second device selection component configured to cause a second group of ambient electronic devices to be selectively charged, the second group of ambient electronic devices different to the first group of ambient electronic devices.

4. A method according to any preceding claim, wherein
the ambient-powered electronic device network comprises a plurality of transmitters, and
the radiative electromagnetic charging signal comprising the device selection component is transmitted from each of the plurality of transmitters of the ambient electronic device network.

5. A method according to any of claims 1 to 3, wherein
the ambient-powered electronic device network comprises a plurality of transmitters, and
the radiative electromagnetic charging signal comprising the device selection component is transmitted from a sub-group of transmitters of the plurality of transmitters.

6. A method according to any preceding claim, wherein
the device selection component of the radiative electromagnetic charging signal comprises a frequency component selected from a group of frequency components, and
wherein the frequency component of the radiative electromagnetic charging signal is configured to select an ambient-powered electronic device associated with the frequency component for charging.

7. A method according to any preceding claim, further comprising
a receiver of the ambient-powered electronic device network receives a communication from the ambient-powered electronic device associated with the device selection component after transmission of the radiative electromagnetic charging signal to the ambient-powered electronic device.

8. A transmitter for an ambient-powered device network configured to perform the method of any of claims 1 to 7.

9. A method of operating an ambient-powered electronic device of an ambient-powered electronic device network comprising:
receiving a radiative electromagnetic charging signal from a transmitter of the ambient-powered electronic device network, the radiative electromagnetic charging signal comprising a device selection component; and
wherein the device selection component of the electromagnetic charging signal is configured to cause the radiative electromagnetic charging signal to selectively charge the ambient-powered electronic device.

10. A method according to claim 9, wherein
the ambient-powered electronic device receives a first radiative electromagnetic charging signal comprising a first device selection component associated with the ambient-powered electronic device wherein the ambient-powered electronic device is selectively charged by the first radiative electromagnetic charging signal, and
the ambient-powered electronic device receives a second radiative electromagnetic charging signal comprising a second device selection component which is associated with another ambient-powered electronic device, wherein the ambient-powered electronic device is not selectively charged by the second radiative electromagnetic charging signal.

11. A method according to claim 9 or claim 10, wherein
the device selection component of the radiative electromagnetic charging signal comprises an amplitude of the radiative electromagnetic charging signal, and
when the amplitude of the radiative electromagnetic charging signal received by the ambient-powered electronic device is above a predetermined threshold, the ambient-powered electronic device is selectively charged.

12. A method according to any of claims 9 to 11, wherein
the device selection component of the radiative electromagnetic charging signal comprises a frequency component selected from a group of frequency components, and
wherein the ambient-powered electronic device is selectively charged when the frequency component of the radiative electromagnetic charging signal corresponds to a frequency component associated with the ambient-powered electronic device, wherein optionally
the ambient-powered electronic device comprises a device selection circuit which filters the radiative electromagnetic charging signal based on the frequency component associated with the ambient-powered electronic device to determine if the ambient-powered electronic device is selectively charged.

13. A method according to any of claims 9 to 12, wherein
once the ambient-powered electronic device is selectively charged, the ambient-powered electronic device performs a computational routine, wherein optionally the computational routine comprises determining information from a sensor of the ambient-powered electronic device.

14. A method according to any of claims 9 to 13, wherein
once the ambient-powered electronic device is selectively charged, the ambient-powered electronic device transmits a communication over the ambient-powered electronic device network to a receiver of the ambient-powered electronic device network.

15. An ambient-powered electronic device configured to perform the method of any of claims 9 to 14.
